# EUROPEAN PATENT SPECIFICATION

(11) **EP 4 510 646 B1**
(45) Date of publication and mention of the grant of the patent: **01.04.2026**
(21) Application number: 24801061.3
(22) Date of filing: 22.02.2024
(51) Int. Cl.: H04W 4/10, H04W 4/029, H04W 76/45, H04W 4/02, H04W 4/08

(54) **INFORMATION PROCESSING DEVICE, INFORMATION PROCESSING METHOD, AND INFORMATION PROCESSING PROGRAM**
INFORMATIONSVERARBEITUNGSVORRICHTUNG, INFORMATIONSVERARBEITUNGSVERFAHREN UND INFORMATIONSVERARBEITUNGSPROGRAMM
DISPOSITIF DE TRAITEMENT D'INFORMATIONS, PROCÉDÉ DE TRAITEMENT D'INFORMATIONS, ET PROGRAMME DE TRAITEMENT D'INFORMATIONS

(30) Priority: 27.06.2023 JP 2023105206
(43) Date of publication of application: 19.02.2025
(73) Proprietor: Science Arts, Inc., Tokyo 150-0002 (JP)
(72) Inventor: HIRAOKA, Hidekazu, Tokyo (JP); OKIMOTO, Kazuaki, Tokyo (JP); HIGUCHI, Daiki, Tokyo (JP)
(74) Representative: AWA Sweden AB
(86) International application number: PCT/JP2024/006633
(87) International publication number: WO 2025/004442

(56) References cited:
- JP-A- 2006 191 563
- JP-A- 2006 295 460
- JP-A- 2009 135 869
- JP-A- 2009 260 740
- JP-A- 2019 004 392
- US-A1- 2019 069 337
- US-B2- 9 398 411

## Description

### FIELD

The present invention relates to an information processing apparatus, an information processing method, and an information processing program.

### BACKGROUND

Push-to-Talk (PTT) communication, which is a half-duplex voice communication system, is known as a technique realizing one-to-many simultaneous group speech communications. The recent spread of multipurpose terminals such as smartphones has attracted attention to Push-to-Talk over Cellular (PoC) that stipulates transmission of packets including speech data to multiple devices in a multicast manner. According to PoC, a transmission right for transmitting speech data is given to one of multiple terminals forming a talk group. The terminal that has acquired the transmission right transmits speech data to the other terminals in a multicast manner.

### CITATION LIST

### PATENT LITERATURE

Patent literature 1: Jpn. Pat. Appln. KOKAI Publication No. 2008-219297

US 2019/069337 A1 discloses a method which enables mobile devices in overlapping geofences to prioritize and monitor talkgroups based on location, geofence mappings, and priority levels. It identifies active geofences, assigns priorities to talkgroups, and dynamically joins the most critical talkgroup. Periodic monitoring ensures devices adapt to higher-priority calls. The system supports geofence-triggered updates, ensuring efficient communication.

US 9 398 411 B2 a method which establishes geofences for communication groups, determines control zone configurations, and sends settings to group members. Configurations include call capabilities, location update frequencies, and feature controls. Updates reflect member locations and geofence changes. The apparatus or software supports various communication types, enabling adaptive management of group settings based on geolocation and priority.

### SUMMARY

### TECHNICAL PROBLEM

If a user in a talk group is performing a PoC communication at a place different from an ordinary place, or is performing a PoC communication while moving, there may be a case where, depending on the characteristics of the talk group, it is preferable that the user belong to another talk group. Let us assume a situation in which the same task and work are performed at different places, for example, shops with a plurality of branches (franchise shops) and factories located in multiple positions. If the user carries out his or her work at different places, for example, at Shop A (Factory A) yesterday and at Shop B (Factory b) today, it is desirable that the user belong to a talk group of each shop and factory to carry out his or her work. However, the user or the manager needs to manually set withdrawal from a group or participation in a new group.

An object of the present invention is to provide an information processing apparatus, an information processing method, and an information processing program for improving the user's convenience.

### SOLUTION TO PROBLEM

According to the present invention, an information processing apparatus for one-to-many communications from one of a plurality of terminals belonging to a talk group to a remaining one or more of the plurality of terminals belonging to the talk group includes a storage, an obtaining unit, a determining unit and a setting unit. The plurality of terminals being associated with the talk group. The storage configured to store a correspondence relationship between one or more talk groups and one or more group location information items about an area defining the one or more talk groups. The obtaining unit configured to obtain terminal location information about a location of each of the plurality of terminals. The determining unit configured to determine, based on the terminal location information and the correspondence relationship, a talk group to which each of the plurality of terminals is to belong. The setting unit configured to switch a talk group to which each of the plurality of terminals currently belongs to the determined talk group. The setting unit switches the talk group to which each of the plurality of terminals currently belongs to a default talk group if a group location information item covering a location indicated by the terminal location information is absent.

### ADVANTAGEOUS EFFECTS OF INVENTION

With the present invention, it is possible to improve the user's convenience.

### BRIEF DESCRIPTION OF THE DRAWINGS

FIG. 1 is a block diagram showing a functional configuration of a communication system according to the present embodiment.
FIG. 2 is a block diagram showing a functional configuration of a processing server according to the present embodiment.
FIG. 3 is a block diagram showing a functional configuration of a terminal according to the present embodiment.
FIG. 4 is a sequence diagram for explaining operations of the processing server and terminals in the communication system according to the present embodiment, for performing speech communications.
FIG. 5 is a diagram showing a group management table according to the present embodiment.
FIG. 6 is a diagram showing a user management table according to the present embodiment.
FIG. 7 is a flowchart related to a group switching process of the information processing apparatus according to the present embodiment.
FIG. 8 is a diagram showing a display example of a movement history of a user on a map, according to the present embodiment.
FIG. 9 is a diagram showing a talk group history table according to the present embodiment.
FIG. 10 is a diagram showing a structure of text data generated by a texting processing unit shown in FIG. 2.

### DETAILED DESCRIPTION

Now, an information processing apparatus, an information processing method, and an information processing program according to an embodiment will be described with reference to the drawings. Hereinafter, elements identical to or similar to those that have already been described will be denoted by identical or similar reference numerals, and redundant descriptions will be basically omitted. If, for example, there are identical or similar elements, a common reference numeral may be used to refer to the elements without distinction, or branch numbers may be used in addition to the common reference numeral to distinguish between the elements.

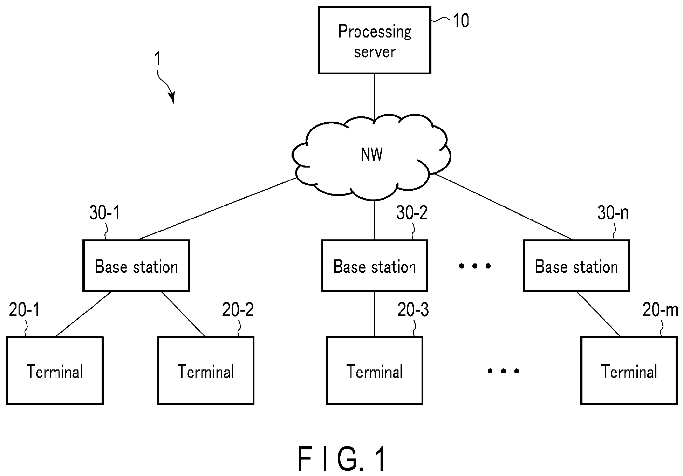

FIG. 1 is a block diagram showing an example of a functional configuration of a communication system 1 according to the present embodiment. The communication system 1 shown in FIG. 1 employs, for example, Push-to-Talk over Cellular (PoC) communications to realize one-to-many speech communications in units of groups. The communication system 1 shown in FIG. 1 includes, for example, a processing server 10, terminals 20-1 to 20-m, and base stations 30-1 to 30-n. Each of n and m is a natural number equal to or greater than two. Each of the terminals 20-1 to 20-m and the base stations 30-1 to 30-n will be simply referred to as a "terminal 20" and a "base station 30", respectively, if they are not particularly distinguished from one another.

The processing server 10 is connected to the base stations 30-1 to 30-n via a network such as the Internet, a communication network furnished by a communication carrier, and so on. The terminals 20-1 to 20-m are each adapted for wireless connection to any of the base stations 30-1 to 30-n that forms a wireless area covering a current location of the terminal.

The processing server 10 may be, for example, an information processing apparatus adapted to implement control for transmitting, in a multicast manner, speech data or video data from any of the terminals 20-1 to 20-m that possesses a transmission right to other one or more of the terminals 20 held by users participating in the same talk group as the user of the originating terminal. In the present embodiment, it is assumed that the "transmission right" refers to a right by which speech data or video data transmissions in the context of PoC are permitted.

The terminals 20-1 to 20-m may be terminals held by respective users, and each may be, for example, a cellular phone, a smartphone, a tablet PC, a given special terminal device, or the like. The terminals 20-1 to 20-m are adapted to conduct one-to-many speech communications under the PoC via the processing server 10. In an exemplary instance, the terminals 20-1 to 20-m each participate in a talk group according to a user operation. One of the terminals 20-1 to 20-m acquires the transmission right, following a user operation. The terminal 20 having acquired the transmission right accepts speech inputs from its user, and transmits the speech data based on the accepted speech to other terminals 20 participating in the same talk group via the processing server 10. Also, the terminals 20-1 to 20-m are adapted to receive text data generated at the processing server 10 based on the speech, and display characters corresponding to the text data on their displays.

The base stations 30-1 to 30-n are provided for respective areas of a predetermined size, and each is adapted to form a predetermined wireless area. The base stations 30-1 to 30-n are each adapted to be wirelessly connected to one or more of the terminals 20-1 to 20-m, which are located within the wireless area formed by itself.

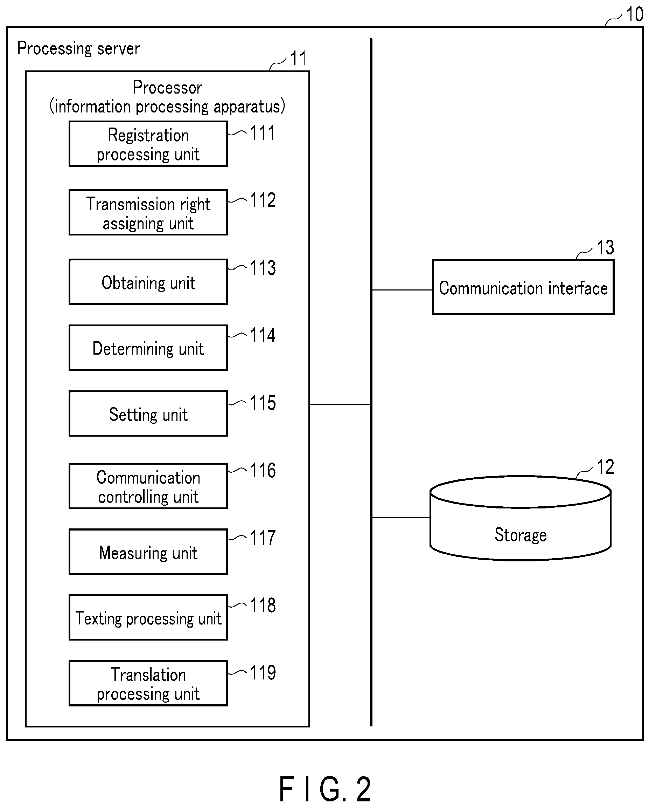

Next, an example of a functional configuration of the processing server 10 will be described with reference to the block diagram of FIG. 2.

As shown in FIG. 2, the processing server 10 includes, for example, a processor 11, a storage 12, and a communication interface 13. The processor 11, the storage 12, and the communication interface 13 are connected together via, for example, a bus so that they can communicate with each other. The processor 11 will also be referred to as an "information processing apparatus".

The processor 11 is, for example, a central processing unit (CPU). In an exemplary operation, the CPU loads and runs application programs stored in the storage 12. The processor 11 thus realizes various functions corresponding to the application programs.

The storage 12 is a so-called auxiliary storage device, and may include a hard disk drive (HDD) or nonvolatile storage circuitry, **e.g.,** a solid-state drive (SSD), etc., for storing various types of information. Note that the storage 12 may also be a drive device, etc., adapted to read and write various information sets from and to portable storage media such as a CD-ROM, a DVD, and a flash memory. The storage 12 stores application programs according to the present embodiment.

The storage 12 is adapted to store user information for users participating in talk groups, under the control of the processor 11. The storage 12 is also adapted to store call data generated based on speech data transmitted from a terminal 20 having the transmission right, text data obtained by subjecting the call data to texting processing, and video data obtained by the terminal 20, under the control of the processor 11. The storage 12 is further adapted to store translated text data obtained by subjecting the text data to translation processing, under the control of the processor 11. The storage 12 stores, in a group management table, a correspondence relationship between one or more talk groups and one or more group location information items respectively defining the one or more talk groups. Also, the storage 12 stores, in a user management table, a correspondence relationship between users participating in talk groups and the talk groups in which the users participate.

The communication interface 13 is circuitry for connection to the network. The communication interface 13 is adapted to transmit, via the network, data to at least one of the terminals 20-1 to 20-m each wirelessly connected to a corresponding one of the base stations 30-1 to 30-n. Also, the communication interface 13 is adapted to receive, via the network, data transmitted from at least one of the terminals 20-1 to 20-m each wirelessly connected to a corresponding one of the base stations 30-1 to 30-n.

The processor 11 shown in FIG. 2 runs the application programs stored in the storage 12 to realize functions corresponding to the application programs. For example, by running the application programs, the processor 11 realizes functions to serve as a registration processing unit 111, a transmission right assigning unit 112, an obtaining unit 113, a determining unit 114, a setting unit 115, a communication controlling unit 116, a measuring unit 117, a texting processing unit 118, and a translation processing unit 119.

The processor 11 shown in FIG. 2 may be constituted by a combination of multiple CPUs. That is, the registration processing unit 111, the transmission right assigning unit 112, the obtaining unit 113, the determining unit 114, the setting unit 115, the communication controlling unit 116, the measuring unit 117, the texting processing unit 118, and the translation processing unit 119 shown in FIG. 2 may be realized by, for example, the respective CPUs running the corresponding application programs.

The processor 11 may also be constituted by special hardware components having the respective functions of the registration processing unit 111, the transmission right assigning unit 112, the obtaining unit 113, the determining unit 114, the setting unit 115, the communication controlling unit 116, the measuring unit 117, the texting processing unit 118, and the translation processing unit 119. Moreover, the processor 11 may be constituted by an application-specific integrated circuit (ASIC), a field programmable gate array (FPGA), other complex programmable logic device (CPLD), or a simple programmable logic device (SPLD), which incorporates dedicated hardware circuits having the respective functions of the registration processing unit 111, the transmission right assigning unit 112, the obtaining unit 113, the determining unit 114, the setting unit 115, the communication controlling unit 116, the measuring unit 117, the texting processing unit 118, and the translation processing unit 119.

The registration processing unit 111 is adapted to register users participating in talk groups for conducting one-to-many speech communications. More specifically, and for example, the registration processing unit 111 acquires user information about users participating in a given talk group, based on a request from the terminals 20-1 to 20-m. The registration processing unit 111 stores the acquired user information in the storage 12, in association with the talk group intended for participation.

The user information may include, for example, an ID of a talk group, an ID of a user participating in the talk group, an IP address of a terminal held by the user, a language code of a language set by the user, a login state of the user, location information of the terminal, and so on. The registration processing unit 111 stores, in the storage 12, definition information indicative of which user participates in which talk group, that is, an ID of a talk group and IDs of users participating in the talk group, for example. Also, the registration processing unit 111 stores, in the storage 12, information that dynamically changes according to the states of the terminals 20, that is, IP addresses, language codes, login states, and location information, etc., for example.

The transmission right assigning unit 112 is adapted to assign a transmission right to one of the terminals held by users participating in a given talk group.

The obtaining unit 113 obtains terminal location information about the locations of the terminals 20.

The determining unit 114 determines, based on the terminal location information and the correspondence relationship stored in the storage 12, a talk group to which each terminal is to belong.

The setting unit 115 switches the talk group to which each terminal 20 currently belongs to a talk group determined by the determining unit 114.

The communication controlling unit 116 is adapted to control communications among terminals 20 held by users participating in a talk group, so that one-to-many speech communications are implemented. More specifically, in an exemplary instance, the communication controlling unit 116 transmits speech data and video data transmitted from a terminal 20 assigned with the transmission right to one or more terminals 20 held by users participating in the same talk group.

Also, the communication controlling unit 116 is adapted to control communications so that text data converted from speech data is transmitted to one or more terminals 20 held by users participating in a talk group. More specifically, in an exemplary instance, the communication controlling unit 116 transmits, upon conversion of speech data into text data, a notice indicative of the completion of the texting processing to one or more terminals 20 held by users participating in a talk group. Then, in response to the terminals 20 requesting transmission of the text data, the communication controlling unit 116 transmits the text data to the requestor terminals 20.

The communication controlling unit 116 is adapted to control communications so that translated text data, which is generated by translating text data into a given language, is transmitted to the terminals in need of the translation. More specifically, in an exemplary instance, the communication controlling unit 116 transmits, upon completion of translation of text data, a notice indicative of the completion of the translation processing to the terminals 20 held by users participating in a talk group. Then, in response to the terminals 20 requesting transmission of the translated text data, the communication controlling unit 116 transmits the translated text data to the requester terminals 20.

The measuring unit 117 measures, for each terminal 20, the moving speed and the number of times the talk group has been switched.

The texting processing unit 118 is adapted to convert speech data transmitted from the terminal with the transmission right into text data. More specifically, and for example, the texting processing unit 118 converts the speech data into text data based on grammar information, linguistic structure information, information about compositions of speech data, stored word information, and so on. Note that the speech-to-text data conversion processing adopted by the texting processing unit 118 may utilize existing technology.

The translation processing unit 119 is adapted to perform translation processing on the text data obtained through the conversion processing by the texting processing unit 118, in order to generate translated text data. More specifically, and for example, the translation processing unit 119 translates the text data obtained through the conversion processing by the texting processing unit 118 into the text data in a language corresponding to the language code associated with an applicable user participating in a talk group. Note that the translation processing adopted by the texting processing unit 118 may utilize existing technology, including statistical machine translation, neural machine translation, etc.

Note that the processing server 10 may include an unillustrated input interface. The input interface may be realized by, for example, a mouse, a keyboard, a touch pad which receives input instructions through contact of its operation screen, and so on. The input interface may convert input instructions from operators into electric signals, and output the electric signals to the processor 11. The input interface is not limited to physical operation devices such as a mouse, a keyboard, etc. Examples of the input interface may include a receive port adapted to accept electric signals from external input devices.

The processing server 10 may also include an unillustrated output interface. The output interface may be realized by, for example, a display device, a print device, and the like. As the display device, any display equipment may be employed, including a CRT display, a liquid crystal display, an organic EL display, an LED display, a plasma display, etc. The display device is adapted to display image data for display subjects. The print device is, for example, a printer. The print device is adapted to print out image data for print subjects in the form of a predetermined sheet. The output interface is not limited to physical output devices such as a display device, a print device, etc. Examples of the output interface may include an output port adapted to send out image data to an external output devices.

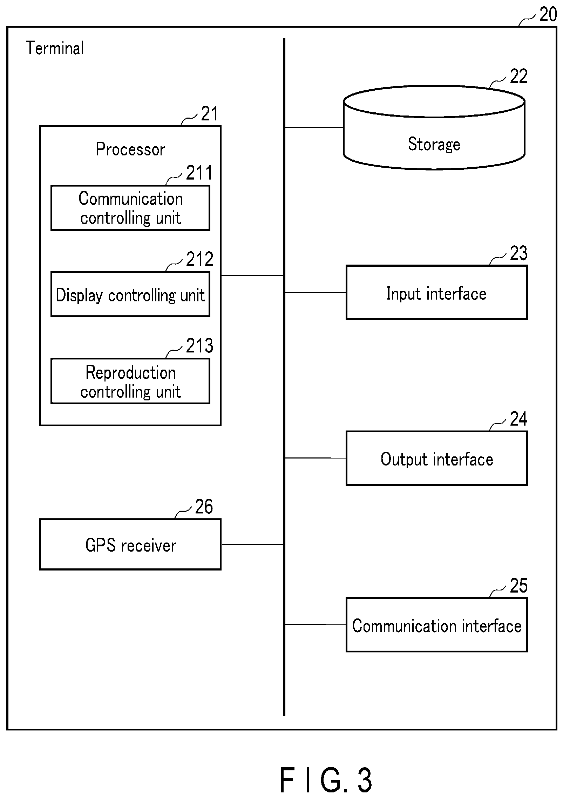

FIG. 3 is a block diagram showing an example of a functional configuration of each of the terminals 20.

The terminal 20 shown in FIG. 3 includes, for example, a processor 21, a storage 22, an input interface 23, an output interface 24, a communication interface 25, and a GPS receiver 26. Note that the terminals 20-1 to 20-m share similar configurations, so they may each be construed as the terminal 20 in the description with reference to FIG. 3.

The processor 21 is, for example, a CPU. In an exemplary operation, the CPU loads application programs stored in the storage 22 into the RAM. The CPU runs the application programs loaded into the RAM. The processor 21 thus realizes various functions corresponding to the application programs.

The storage 22 is a so-called auxiliary storage device, and may include nonvolatile storage circuitry, e.g., a NAND or NOR flash memory, etc. Note that the storage 22 may also be a drive device, etc., adapted to read and write various information sets from and to portable storage media such as an SD card, a micro SD card, and so on. The storage 22 stores application programs according to the present embodiment. The storage 22 also stores information for the talk groups available for its terminal to participate in.

The input interface 23 may be realized by buttons, a touch panel which receives input instructions through contact of its operation screen, a microphone for speech inputs, and so on. The input interface 23 is adapted to convert input instructions from an operator into electric signals, and to output the electric signals to the processor 21.

The output interface 24 may be realized by, for example, a display device, a speaker, and so on. Examples of the display device include a liquid crystal display, an organic EL display, etc. The display device is adapted to display image data and video data for display subjects. The speaker is adapted to reproduce speech data involved in speech communications.

The communication interface 25 is circuitry for wireless communications with the base stations 30-1 to 30-n. The communication interface 25 may be realized by, for example, an antenna and a wireless equipment component. The antenna is adapted to receive incoming radio signals. Also, the antenna is adapted to transmit radio signals output from the wireless equipment component. The wireless equipment component is adapted to convert the radio signals received by the antenna with a preset demodulation scheme, and to output the data after the conversion to the processor 21. The wireless equipment component is also adapted to convert the data generated at the processor 21 into radio signals with a preset modulation scheme, and to output the radio signals after the conversion to the antenna.

The GPS receiver 26 is adapted to receive signals from GPS satellites, and to generate terminal location information based on the received signals.

The processor 21 shown in FIG. 3 runs the application programs stored in the storage 22 to realize functions corresponding to the application programs. For example, by running the application programs, the processor 21 realizes functions to serve as a communication controlling unit 211, a display controlling unit 212, and a reproduction controlling unit 213.

The communication controlling unit 211 is adapted to control communications with the processing server 10. More specifically, and for example, the communication controlling unit 211 of the terminal 20 with the transmission right converts a speech input from the microphone in accordance with a TCP/IP-based unique protocol. The communication controlling unit 211 transmits the speech data after the conversion to the processing server 10 via the network NW and the corresponding base station 30. Also, the communication controlling unit 211 of the terminal 20 with the transmission right receives text data from the processing server 10 via the network NW and the corresponding base station 30.

The communication controlling unit 211 of each of the terminals 20 without the transmission right, for example, receives speech data transmitted from the processing server 10 and text data converted from the speech data through the texting processing. Also, if the language set for a terminal 20 without the transmission right differs from the language set for the terminal 20 with the transmission right, the communication controlling unit 211 of the former receives translated text data, i.e., the text data translated into the language set for the user's terminal, from the processing server 10.

The communication controlling unit 211 transmits terminal location information generated by the GPS receiver 26 to the processing server 10 at the timing of receiving a user instruction or periodically at predetermined intervals.

The display controlling unit 212 is adapted to control processing for display operations with the display as the output interface 24. More specifically, and for example, the display controlling unit 212 controls the display so that the display presents characters based on the received various notices, as well as the received text data, the translated text data, and the received video data.

The reproduction controlling unit 213 is adapted to control reproduction of speech corresponding to the characters based on text data that are being displayed on the display. More specifically, and for example, the reproduction controlling unit 213 controls the speaker as the output interface 24 to reproduce the call data corresponding to the characters based on text data that are being displayed on the display. Also, the reproduction controlling unit 213 obtains video data, and causes the display to display the obtained video data.

The reproduction controlling unit 213 is adapted to control recitation of characters which are based on translated text data. More specifically, and for example, in response to a request for recitation of characters based on translated text data that are being displayed on the display, the reproduction controlling unit 213 converts the characters that are a subject of the request into speech data. The reproduction controlling unit 213 then controls the speaker as the output interface 24 to reproduce the speech data obtained from the conversion. Note that the reproduction controlling unit 213 may be realized by an application program interface (API) provided by an operating system (OS).

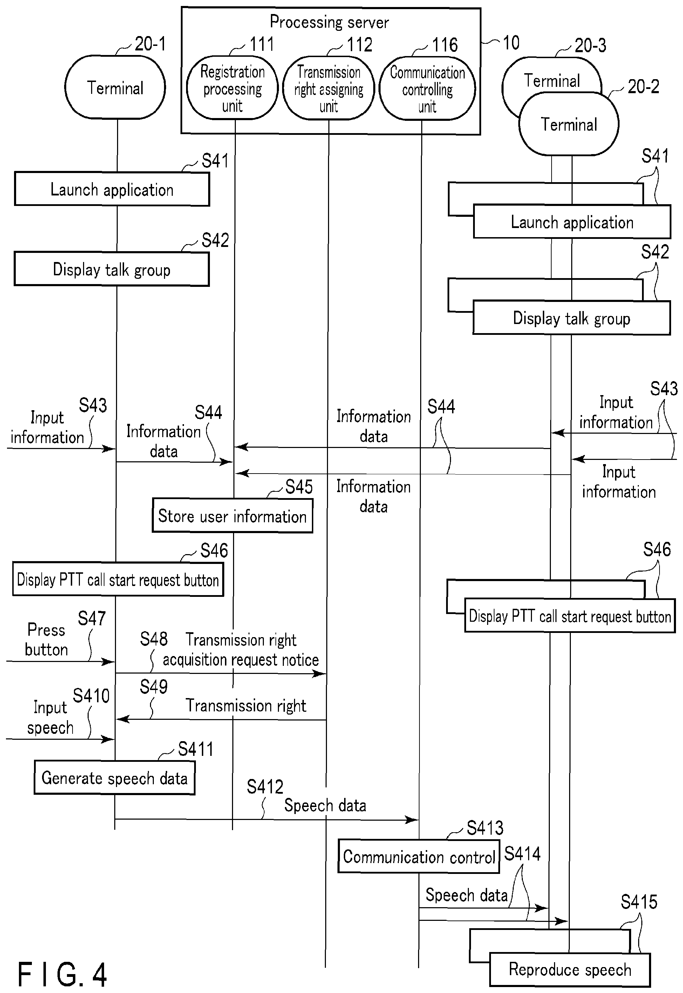

Next, a description will be given, with reference to the sequence diagram of FIG. 4, of how the processing server 10 and the terminals 20-1 to 20-m, configured as above and constituting the communication system 1, would operate in a PoC communication. Note that the description will assume an instance where the terminals 20-1 to 20-3 will participate in a talk group G1 for implementing speech communications. That is, the storage 22 already stores information for the talk group G1 in each of the terminals 20-1 to 20-3, and the terminals 20-1 to 20-3 are in a state of being ready to participate in the talk group G1.

The users of the respective terminals 20-1 to 20-3 operate the terminals 20-1 to 20-3 to each launch the application program for conducting one-to-many speech communications utilizing the PoC (step SA1). In each of the terminals 20-1 to 20-3, the display controlling unit 212 causes the display as the output interface 24 to present a display indicative of the talk group G1 as a selectable talk group (step SA2). The display here may show two or more talk groups open for participation.

The users of the terminals 20-1 to 20-3 select the talk group G1 shown on their displays. The processor 21 of each of the terminals 20-1 to 20-3 may automatically select the talk group G1 for participation, according to the frequency of participation, user setting, etc. Upon selection of the talk group G1, the display controlling unit 212 of each of the terminals 20-1 to 20-3 causes the display to display a list of languages available in the service. The users of the terminals 20-1 to 20-3 each select the language desired for use, from the multiple languages shown on their display (step SA3). Also, upon selection of the talk group G1, the processor 21 of each of the terminals 20-1 to 20-3 causes the terminal's GPS receiver 26 to generate terminal location information as of the talk group selection.

Upon selection of the talk group and the language for use, the controlling unit 211 of each of the terminals 20-1 to 20-3 generates information data containing an ID of the selected talk group (hereinafter, "talk group ID"), an ID set for the user's terminal (hereinafter, "user ID"), information for the selected language (hereinafter, "language code"), the terminal location information, etc. The information data has, for example, a packet structure. The terminals 20-1 and 20-2 transmit the generated information data to the processing server 10 via the base station 30-1 and the network NW (step SA4). Meanwhile, the terminal 20-3 transmits the generated information data to the processing server 10 via the base station 30-2 and the network NW (step SA4).

The registration processing unit 111 of the processing server 10 stores, in the user management table in the storage 12, information about users participating in the talk group based on the information data transmitted from the terminals 20-1 to 20-3, in association with the talk group intended for participation (step SA5).

Upon selection of the talk group and the language for use, the display controlling unit 212 of each of the terminals 20-1 to 20-3 causes the display to display a PTT call start requesting button (step SA6). In this instance, for example, the user of the terminal 20-1 presses the PTT call start requesting button displayed on the display of the terminal 20-1 (step SA7). Upon the user pressing the PTT call start requesting button, the communication controlling unit 211 of the terminal 20-1 transmits a transmission right acquisition request notice as a request for the transmission right together with the user ID to the processing server 10 via the base station 30-1 and the network NW (step SA8). Note that the PTT call start requesting button is not limited to an object displayed on the display. For example, the PTT call start requesting button may be a physical button furnished on an operational device adapted for connection with the terminals, e.g., the terminal 20-1, via the input interface 23 as a connector.

The transmission right assigning unit 112 of the processing server 10, upon receipt of the transmission right acquisition request notice from the terminal 20-1, assigns the transmission right to the terminal 20-1 (step SA9). Upon acquisition of the transmission right, the user of the terminal 20-1 inputs speech from the microphone of the terminal 20-1 (step SA10). The communication controlling unit 211 of the terminal 20-1 generates speech data based on the speech input from the microphone (step SA11). The terminal 20-1 transmits the generated speech data to the processing server 10 via the base station 30-1 and the network NW (step SA12).

Upon receipt of the speech data transmitted from the terminal 20-1 with the transmission right, the communication controlling unit 116 of the processing server 10 performs communication control for transferring the speech data to the terminals 20-2 and 20-3 participating in the talk group G1 (step SA13). More specifically, and for example, upon receipt of the speech data transmitted from the terminal 20-1, the communication controlling unit 116 determines whether or not the caller ID "User01" stored in the speech data and the user ID "User01" of the user having been assigned with the transmission right match each other. Since the caller ID stored in the speech data and the user ID of the user assigned with the transmission right match each other, i.e., both are "User01", the communication controlling unit 116 transmits the speech data to the respective terminals 20-2 and 20-3 by referring to the IP addresses of the terminals 20-2 and 20-3 participating in the talk group G1 (step SA14).

Upon receipt of the speech data transmitted from the processing server 10, the communication controlling unit 211 of each of the terminals 20-2 and 20-3 reproduces speech based on the received speech data by outputting it from the speaker (step SA15). A PoC communication is therefore established, and a PTT communication is performed.

Note that the terminal having acquired the transmission right may transmit video data obtained by the terminal 20-1 together with speech data to the processing server 10 at step SA12, even though such a configuration is not illustrated. In this case, the processing server 10 can transfer the video data transmitted from the terminal 20-1 to the terminals 20-2 and 20-3 participating in the talk group G1. Alternatively, the terminals 20 not having acquired the transmission right (e.g., the terminals 20-2 and 20-3) may transmit the video data to the processing server 10. In this case, the processing server 10 can transfer the video data to other terminals 20 participating in the talk group G1.

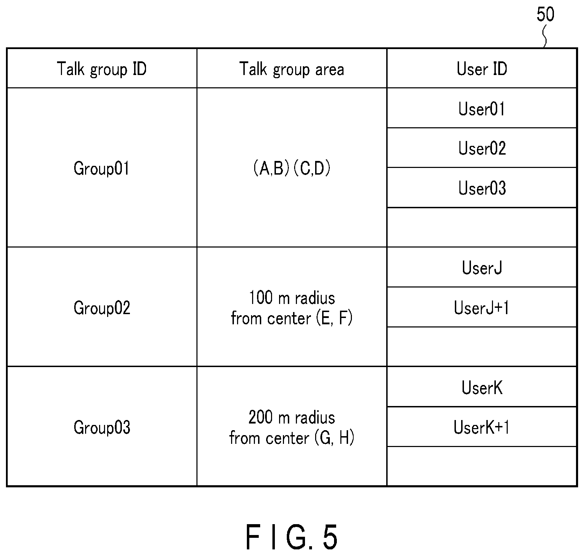

Next, an example of a group management table which is stored in the storage 12 and used for managing users participating in a talk group is shown in FIG. 5.

In the group management table 50 shown in FIG. 5, talk group IDs, talk group areas, and user IDs are associated with one another. A talk group ID is a character string or a value for uniquely identifying a talk group. A talk group area is location information about an area that defines a talk group. The talk group area is defined by, for example, coordinate information on a map based on GPS information. More specifically, the talk group area may be defined within a range of a certain distance from its central coordinates or diagonal coordinates. Note that coordinate information of a single point on the map information is set so as not to belong to different talk group areas in an overlapping manner. The talk group area is defined not only by exact coordinate information on a map, but may be defined based on, for example, address information of a shop or a predetermined area defined in advance, such as a park. That is, a certain range from a shop may be set as a single talk group area, or the site of a factory may be set as a single talk group area. A user ID is a character string or a number for uniquely identifying the user.

In the example of FIG. 5, three talk groups are managed; more specifically, a talk group area of a talk group G1 identified by the talk group ID "Group01" is defined by diagonal coordinates "(A, B) (C, D)". The stored information indicates that users of the terminals 20-1 to 20-3 identified by the user IDs "User01" to "User03" are participating in the talk group G1.

Similarly, a talk group area of a talk group G2 identified by the talk group ID "Group02" is defined by "100 m radius from center (E, F)", and is set within a 100 m radius range from coordinates (E, F). The stored information indicates that users identified by the user IDs "UserJ" and "UserJ+1" are participating in the talk group G2.

Similarly, a talk group area of a talk group G3 identified by the talk group ID "Group03" is defined by "200 m radius from center (G, H)", and is set within a 200 m radius range from coordinates (G, H). The stored information indicates that users identified by the user IDs "UserK" and "UserK+1" are participating in the talk group G3.

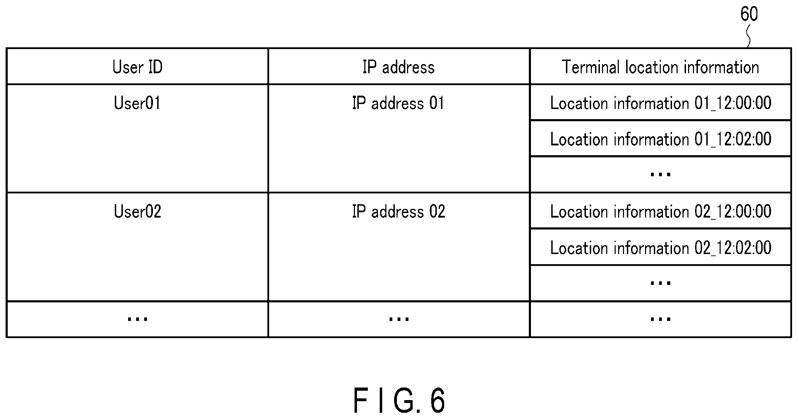

Next, an example of a user management table stored in the storage 12 and used for managing user information that changes dynamically will be described with reference to FIG. 6.

In the user management table 60 shown in FIG. 6, user IDs, IP addresses, and terminal location information items are associated with one another. As a matter of course, items contained in the information data transmitted from the terminal 20 may also be associated in the user management table. More specifically, the user ID "User01" is associated with the IP address "IP address 01" and the terminal location information "terminal location information 01_12:00:00" of the terminal 20-1. For the terminal location information, GPS information (corresponding to the terminal location information 01) transmitted from the terminal 20-1 at predetermined intervals is associated with a time stamp and stored as time-series data. To save the storage area, the time-series data of the terminal location information may be deleted after a certain period of time has passed.

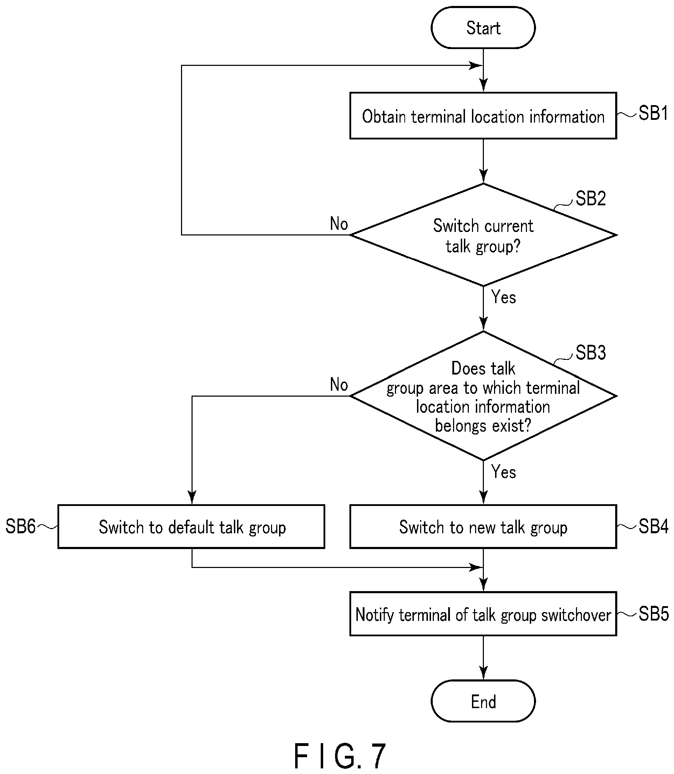

Next, a group switching process of the information processing apparatus will be described with reference to the flowchart of FIG. 7. Herein, an example of processing at a single terminal 20 will be described; however, processing at a plurality of terminals 20 can be performed simultaneously and in parallel.

At step SB1, the obtaining unit 113 obtains terminal location information of the terminal 20.

At step SB2, the determining unit 114 determines whether or not to switch the talk group to which the terminal 20 currently belongs. More specifically, if the terminal location information indicates coordinates not falling within the range covered by the talk group area of the talk group to which the terminal 20 currently belongs, the determining unit 114 determines to switch the talk group to which the terminal 20 currently belongs. If it is determined that the talk group to which the terminal 20 currently belongs is to be switched, the processing advances to step SB3; if it is determined that the talk group is not to be switched, the processing returns to step SB1, and a similar process is repeated.

At step SB3, the determining unit 114 refers to the terminal location information, and determines whether or not a talk group area to which the terminal location information currently belongs exists. More specifically, the determining unit 114 determines, if coordinates of terminal location information fall within the range covered by any of the talk group areas, that the terminal location information belongs to the talk group area. If there is a talk group area that covers the terminal location information, the processing advances to step SB4. On the other hand, if there is no talk group area that covers the terminal location information, the processing advances to step SB6.

At step SB4, the setting unit 115 switches the talk group to which the terminal 20 currently belongs to a new talk group.

At step SB5, the communication controlling unit 116 notifies the terminal 20 that the talk group to which the terminal 20 belongs has been switched to a new talk group. In the terminal 20, a notification regarding the switching of the talk group to which the terminal 20 belongs can be made either by speech or by screen display.

On the other hand, at step SB6, since a talk group to which the terminal 20 can belong is absent, the talk group to which the terminal 20 belongs is switched to a default talk group. Thereafter, the processing advances to step SB5, and the terminal 20 is informed that the talk group to which the terminal 20 belongs has been switched to a default talk group. The default talk group is, for example, a talk group set without regard to the area. It is thereby possible to perform optimum talk group switching in accordance with the movement of the user holding the terminal 20.

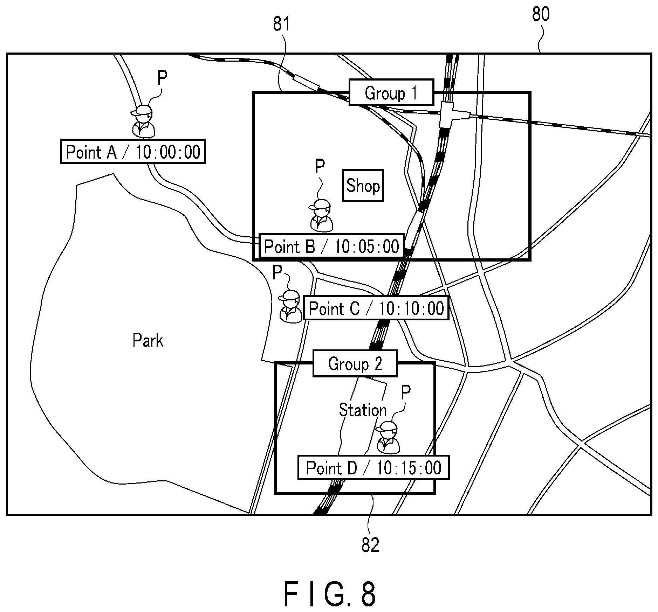

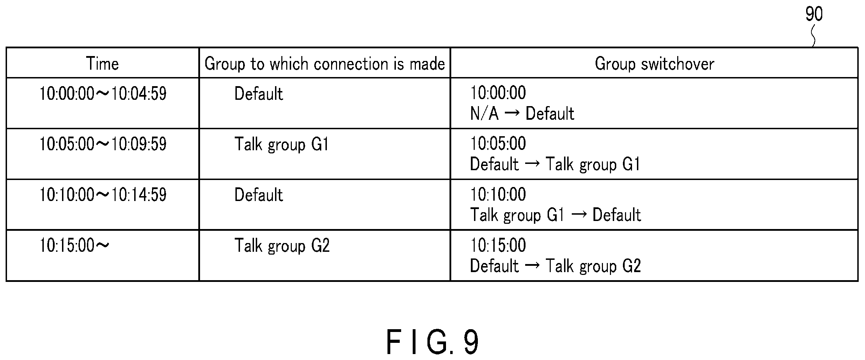

Next, a specific example of talk group switching will be described with reference to FIGS. 8 and 9.

FIG. 8 is a display example of a movement history of a user P on the map 80. The map 80 shown in FIG. 8 may be displayed on the processing server 10 or the terminal 20. A talk group area 81 and a talk group area 82 are displayed on the map 80. For convenience of explanation, the movement history of the user P holding the terminal 20 is plotted on the map based on the terminal location information.

FIG. 9 shows a talk group history table 90 stored in the storage 12 and showing a history of talk groups to which the terminal 20 has belonged. The talk group history table 90 is a timetable in which a time, talk groups that the terminal 20 has belonged to, and talk group switchovers are associated with one another, based on which it is possible to know which talk group the terminal 20 belonged to in each time. It is assumed herein that the terminal location information is transmitted to the processing server 10 every five minutes.

Specifically, as shown in FIG. 8, at time "10:00:00", the user is located at a point A, and there is no talk group area that covers the point A. Accordingly, the user's talk group is set to "Default".

Secondly, at time "10:05:00", the user is located at a point B, and the point B is covered by a talk group 1. Accordingly, the user's talk group is switched from "Default" to "Talk Group 1". Thirdly, at time "10:10:00", the user is located at a point C, and there is no talk group area that covers the point C. Accordingly, the user's talk group is switched from "Talk Group 1" to "Default".

Lastly, at time 10:15:00", the user is located at a point **D,** and the point D is covered by the talk group 2. Accordingly, the user's talk group is switched from "Default" to "Talk Group 2".

Since it is assumed herein that the terminal location information is transmitted from the terminal 20 every five minutes, the terminal 20 belongs to the talk group set at "10:00:00" during the period from "10:00:00" to "10:05:00" when the next terminal location information is transmitted. That is, there may be a case where the terminal 20 keeps belonging to the same talk group if the terminal 20 moves at a fast speed and has already moved out of the range covered by the talk group area of the talk group to which the terminal 20 currently belongs, since the terminal location information has not been transmitted. Conversely, there may be a case where the terminal 20 keeps belonging to the previous talk group even if the terminal 20 has already moved out of the range covered by a new talk group area, since the terminal location information has not been transmitted.

Accordingly, if the moving speed of the user holding the terminal 20 is equal to or greater than a threshold value, the communication controlling unit 116 may transmit, to the terminal 20, a request signal for shortening the transmission interval of the terminal location information to request that the transmission interval be shortened. It is thereby possible to perform switching to an optimum talk group in accordance with the movement of the terminal, thus improving the user's convenience.

If the number of times the talk group to which the terminal 20 belongs has been switched is equal to or greater than a threshold value, the communication controlling unit 116 may be configured to request the terminal 20 to transmit the terminal location information at a shorter interval. More specifically, the measuring unit 117 measures, for the terminal 20, the moving speed and the number of times the talk group has been switched by referring to the history of the terminal location information and the talk group history table 90. The determining unit 114 determines whether or not the moving speed of the terminal 20 is equal to or greater than a threshold value, and determines, for the terminal 20, whether or not the number of times the talk group has been switched is equal to or greater than a threshold value. Thereafter, if the determining unit 114 has determined that the moving speed of the terminal 20 is equal to or greater than the threshold value, or that the number of times the talk group has been switched is equal to or greater than the threshold value, a request can be made to the terminal 20 to transmit the terminal location information at a shorter interval, as described above.

By shortening the transmission interval of the terminal location information in view of the possibility that the terminal 20 may be moving at a high speed, it is possible to improve the precision in switching of the talk group, thereby improving the user's convenience.

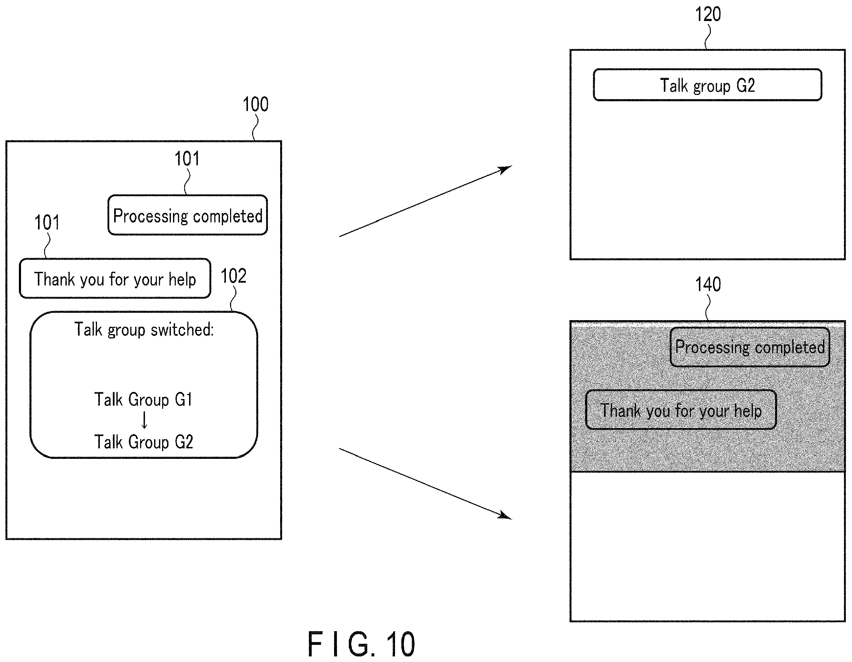

Next, an example of a talk group switching notification in the terminal 20 will be described with reference to FIG. 10.

FIG. 10 shows an example of a talk screen 100 displayed on the terminal 20. Herein, a case is assumed where a PTT communication has already been established in a talk group to which the terminal 20 belongs, and text data 101 of the speech is being displayed. In this case, if there is a talk group switchover, a talk group switching notification 102 is displayed on the screen of the terminal 20. It is assumed herein that the following is displayed: "Talk group switched: Talk Group G1 → Talk Group G2".

Thereafter, a new talk screen may be displayed, as in the screen 120; alternatively, a previous talk group and a new talk group may be discriminably displayed, as in the screen 140. That is, the display may be in any form that allows the user holding the terminal 20 to understand that the talk group has been switched.

According to the information processing apparatus of the present embodiment with the above-described configuration, it is possible to perform optimum talk group switching in accordance with movement of the user holding the terminal by determining a talk group to which each of the plurality of terminals is to belong based on the terminal location information transmitted from the terminal and the talk group area defining the talk group. Therefore, the communication system 1 and the processing server 10 according to the present embodiment can improve the user's convenience.

According to the present embodiment, the storage 12 of the processing server 10 is adapted to store the generated text data. Upon generating text data, the texting processing unit 118 gives a notice indicative of the completion of the texting processing to the terminals 20-1 to 20-3 participating in the talk group G1. The terminals in receipt of this texting completion notice return a text data request notice, and the communication controlling unit 116 is adapted to then transmit, in response to the text data request notice, the text data stored in the storage 12 to the requester terminals. With this configuration, the processing server 10 enables the terminals 20-1 to 20-m to display the characters based on the text data on their displays, without requiring them to store the text data in their storages 22. As such, since the terminals 20-1 to 20-m do not keep text data in their storages, information leakage can be prevented.

Also, according to the present embodiment, the communication controlling unit 116 of the processing server 10 is adapted so that, when the terminal which has received a texting completion notice returns a display start request notice indicative of a request for starting character display based on the text data, the communication controlling unit 116 transmits multiple text data items previously stored in the storage 12 to the requestor terminal. With this configuration, the users of the terminals 20-1 to 20-m can check the flow of a call through corresponding characters, even if the users join a talk group in the middle of an ongoing call or the users start character display for speech in the middle of a call.

According to the present embodiment, the storage 12 of the processing server 10 is adapted to store the speech data used for generating text data as call data. The communication controlling unit 116 is adapted so that, when the terminal 20 which has received the text data returns a reproduction request for speech corresponding to the text data, the communication controlling unit 116 transmits the call data corresponding to the text data requested for reproduction, among the call data stored in the storage 12, to the terminal as the reproduction requester. With this configuration, the users of the terminals 20-1 to 20-m can listen to the actual call corresponding to the characters displayed on their displays, at any desired timing. Moreover, even if the characters on the display involve an error, the users are allowed to verify the call contents for accuracy.

According to the present embodiment, the texting processing unit 118 of the processing server 10 is adapted to generate translated text data by performing translation processing on the text data generated by the texting processing unit 118. The communication controlling unit 116 is adapted to then transmit the generated translated text data to, among the terminals 20-1 to 20-3 participating in the talk group G1, the terminal 20-3 with a setting of the language different from that for the terminal 20-1 possessing the transmission right. With this configuration, the users in a talk group, even those having different language backgrounds, can all understand the contents of calls. That is, the configuration allows for multi-language communications.

While certain embodiments of the invention have been described, they have been presented by way of example only, and are not intended to limit the scope of the invention.

### REFERENCE SIGNS LIST

1: communication system; 10: processing server; 11, 21: processor; 12, 22: storage; 13, 25: communication interface; 20, 20-1 to 20-m: terminal, 23: input interface; 24: output interface; 26: GPS receiver; 50: group management table; 60: user management table; 80: map; 81, 82: talk group area; 90: talk group history table; 100: talk screen; 101: text data; 102: switching notification; 111: registration processing unit; 112: transmission right assigning unit; 113: obtaining unit; 114: determining unit; 115: setting unit; 116, 211: communication controlling unit; 120, 140: screen; 212: display controlling unit; 213: reproduction controlling unit

## Claims

1. An information processing apparatus for one-to-many communications from one of a plurality of terminals (20) belonging to a talk group to a remaining one or more of the plurality of terminals (20) belonging to the talk group, the plurality of terminals (20) being associated with the talk group, comprising:
a storage (12) configured to store a correspondence relationship between one or more talk groups and one or more group location information items about an area defining the one or more talk groups;
an obtaining unit (113) configured to obtain terminal location information about a location of each of the plurality of terminals (20);
a determining unit (114) configured to determine, based on the terminal location information and the correspondence relationship, a talk group to which each of the plurality of terminals (20) is to belong;
a setting unit (115) configured to switch a talk group to which each of the plurality of terminals (20) currently belongs to the determined talk group;
a measuring unit (117) configured to measure, for each of the plurality of terminals (20), a moving speed and a number of times the talk group has been switched; and
a communication controlling unit (116) configured to transmit, if at least one of the moving speed and the number of times the talk group has been switched is equal to or greater than a threshold value, a request signal to each of the plurality of terminals (20) to make a transmission interval of the terminal location information shorter than a currently set transmission interval.

2. The information processing apparatus (11) according to claim 1, further comprising a notification unit (116) configured, if switching of the talk group has been accomplished by the setting unit (115), to notify each of the plurality of terminals (20) that the switching of the talk group has been accomplished.

3. The information processing apparatus (11) according to claim 1 or 2, further comprising:
a texting processing unit (118) configured to generate text data based on speech data transmitted from each of the plurality of terminals (20); and
a communication controlling unit (116) configured to manage the generated text data according to the talk group to transmit the generated text data to at least one of the plurality of terminals (20) belonging to the talk group.

4. The information processing apparatus (11) according to any one of claims 1 to 3, wherein, if the switching of the talk group has been accomplished by the setting unit (115), a previous talk group and a new talk group are discriminably displayed on each of the plurality of terminals (20).

5. An information processing method for one-to-many communications from one of a plurality of terminals belonging to a talk group to a remaining one or more of the plurality of terminals belonging to the talk group, the plurality of terminals being associated with the talk group, comprising:
storing, in a storage, a correspondence relationship between one or more talk groups and one or more group location information items about an area defining the one or more talk groups;
obtaining terminal location information about a location of each of the plurality of terminals;
determining, based on the terminal location information and the correspondence relationship, a talk group to which each of the plurality of terminals is to belong;
switching a talk group to which each of the plurality of terminals currently belongs to the determined talk group;
measuring, for each of the plurality of terminals, a moving speed and a number of times the talk group has been switched; and
transmitting, if at least one of the moving speed and the number of times the talk group has been switched is equal to or greater than a threshold value, a request signal to each of the plurality of terminals to make a transmission interval of the terminal location information shorter than a currently set transmission interval.

6. An information processing program for one-to-many communications from one of a plurality of terminals belonging to a talk group to a remaining one or more of the plurality of terminals belonging to the talk group, the plurality of terminals being associated with the talk group, the program causing a computer to function as:
a storage means for storing, in a storage, a correspondence relationship between one or more talk groups and one or more group location information items about an area defining the one or more talk groups;
an obtaining means for obtaining terminal location information about a location of each of the plurality of terminals;
a determining means for determining, based on the terminal location information and the correspondence relationship, a talk group to which each of the plurality of terminals is to belong;
a setting means for switching a talk group to which each of the plurality of terminals currently belongs to the determined talk group;
a measuring means for measuring, for each of the plurality of terminals, a moving speed and a number of times the talk group has been switched; and
a communication control means for transmitting, if at least one of the moving speed and the number of times the talk group has been switched is equal to or greater than a threshold value, a request signal to each of the plurality of terminals to make a transmission interval of the terminal location information shorter than a currently set transmission interval.

## Patentansprüche

1. Informationsverarbeitungsvorrichtung für eine One-to-many-Kommunikation von einem von mehreren Endgeräten (20), die zu einer Gesprächsgruppe gehören, mit einem oder mehreren übrigen der mehreren Endgeräte (20), die zu der Gesprächsgruppe gehören, wobei die mehreren Endgeräte (20) mit der Gesprächsgruppe verknüpft sind, mit Folgendem:
einem Speicher (12), der so konfiguriert ist, dass er eine Entsprechung zwischen einer oder mehreren Gesprächsgruppen und einer oder mehreren Gruppenstandortinformationen über ein Gebiet speichert, das die eine oder die mehreren Gesprächsgruppen definiert,
einer Erfassungseinheit (113), die so konfiguriert ist, dass sie Endgerätstandortinformationen über einen Standort jedes der mehreren Endgeräte (20) erfasst,
einer Bestimmungseinheit (114), die so konfiguriert ist, dass sie auf der Grundlage der Endgerätstandortinformationen und der Entsprechung eine Gesprächsgruppe bestimmt, zu der jedes der mehreren Endgeräte (20) gehören soll,
einer Einstelleinheit (115), die so konfiguriert ist, dass sie eine Gesprächsgruppe, zu der jedes der mehreren Endgeräte (20) derzeit gehört, zu der bestimmten Gesprächsgruppe umschaltet,
einer Messeinheit (117), die so konfiguriert ist, dass sie für jedes der mehreren Endgeräte (20) eine Bewegungsgeschwindigkeit und eine Anzahl Male misst, die die Gesprächsgruppe umgeschaltet wurde, und einer Kommunikationssteuereinheit (116), die so konfiguriert ist, dass sie, wenn die Bewegungsgeschwindigkeit oder/und die Anzahl Male, die die Gesprächsgruppe umgeschaltet wurde, mindestens einem Grenzwert entspricht, an jedes der mehreren Endgeräte (20) ein Anforderungssignal sendet, dass ein Sendeintervall für die Endgerätstandortinformationen kürzer sein soll als ein derzeit eingestelltes Sendeintervall.

2. Informationsverarbeitungsvorrichtung (11) nach Anspruch 1, die ferner eine Meldeeinheit (116) umfasst, die so konfiguriert ist, dass sie, wenn das Umschalten der Gesprächsgruppe durch die Einstelleinheit (115) erfolgt ist, jedem der mehreren Endgeräte (20) meldet, dass das Umschalten der Gesprächsgruppe erfolgt ist.

3. Informationsverarbeitungsvorrichtung (11) nach Anspruch 1 oder 2, die ferner Folgendes umfasst:
eine Textverarbeitungsvorrichtung (118), die so konfiguriert ist, dass sie auf der Grundlage von Sprachdaten, die von jedem der mehreren Endgeräte (20) gesendet werden, Textdaten generiert, und
eine Kommunikationssteuereinheit (116), die so konfiguriert ist, dass sie die generierten Textdaten der Gesprächsgruppe entsprechend verwaltet und so zu mindestens einem der mehreren Endgeräte (20) sendet, die zu der Gesprächsgruppe gehören.

4. Informationsverarbeitungsvorrichtung (11) nach einem der Ansprüche 1 bis 3, wobei, wenn das Umschalten der Gesprächsgruppe durch die Einstelleinheit (115) erfolgt ist, auf jedem der mehreren Endgeräte (20) eine vorherige und eine neue Gesprächsgruppe unterscheidbar angezeigt werden.

5. Informationsverarbeitungsverfahren für eine One-to-many-Kommunikation von einem von mehreren Endgeräten, die zu einer Gesprächsgruppe gehören, mit einem oder mehreren übrigen der mehreren Endgeräte, die zu der Gesprächsgruppe gehören, wobei die mehreren Endgeräte mit der Gesprächsgruppe verknüpft sind, mit Folgendem:
Speichern einer Entsprechung zwischen einer oder mehreren Gesprächsgruppen und einer oder mehreren Gruppenstandortinformationen über ein Gebiet, das die eine oder die mehreren Gesprächsgruppen definiert, in einem Speicher,
Erfassen von Endgerätstandortinformationen über einen Standort jedes der mehreren Endgeräte,
Bestimmen einer Gesprächsgruppe, zu der jedes der mehreren Endgeräte gehören soll, auf der Grundlage der Endgerätstandortinformationen und der Entsprechung,
Umschalten einer Gesprächsgruppe, zu der jedes der mehreren Endgeräte derzeit gehört, zu der bestimmten Gesprächsgruppe,
Messen einer Bewegungsgeschwindigkeit und einer Anzahl Male, die die Gesprächsgruppe umgeschaltet wurde, für jedes der mehreren Endgeräte und,
wenn die Bewegungsgeschwindigkeit oder/und die Anzahl Male, die die Gesprächsgruppe umgeschaltet wurde, mindestens einem Grenzwert entspricht, Senden eines Anforderungssignals an jedes der mehreren Endgeräte, dass ein Sendeintervall für die Endgerätstandortinformationen kürzer sein soll als ein derzeit eingestelltes Sendeintervall.

6. Informationsverarbeitungsprogramm für eine One-to-many-Kommunikation von einem von mehreren Endgeräten, die zu einer Gesprächsgruppe gehören, mit einem oder mehreren übrigen der mehreren Endgeräte, die zu der Gesprächsgruppe gehören, wobei die mehreren Endgeräte mit der Gesprächsgruppe verknüpft sind, wobei das Programm einen Computer dazu veranlasst, als Folgendes zu dienen:
als Speichermittel zum Speichern einer Entsprechung zwischen einer oder mehreren Gesprächsgruppen und einer oder mehreren Gruppenstandortinformationen über ein Gebiet, das die eine oder die mehreren Gesprächsgruppen definiert, in einem Speicher,
als Erfassungsmittel zum Erfassen von Endgerätstandortinformationen über einen Standort jedes der mehreren Endgeräte,
als Bestimmungsmittel zum Bestimmen einer Gesprächsgruppe, zu der jedes der mehreren Endgeräte gehören soll, auf der Grundlage der Endgerätstandortinformationen und der Entsprechung,
als Einstellmittel zum Umschalten einer Gesprächsgruppe, zu der jedes der mehreren Endgeräte derzeit gehört, zu der bestimmten Gesprächsgruppe,
als Messmittel zum Messen einer Bewegungsgeschwindigkeit und einer Anzahl Male, die die Gesprächsgruppe umgeschaltet wurde, für jedes der mehreren Endgeräte und
als Kommunikationsmittel zum Senden eines Anforderungssignals an jedes der mehreren Endgeräte, dass ein Sendeintervall für die Endgerätstandortinformationen kürzer sein soll als ein derzeit eingestelltes Sendeintervall, wenn die Bewegungsgeschwindigkeit oder/und die Anzahl Male, die die Gesprächsgruppe umgeschaltet wurde, mindestens einem Grenzwert entspricht.

## Revendications

1. Appareil de traitement d'information pour les communications un-à-plusieurs d'un terminal parmi une pluralité de terminaux (20) appartenant à un groupe de discussion vers un ou plusieurs autres terminaux parmi la pluralité de terminaux (20), la pluralité de terminaux (20) étant associés au groupe de discussion, comprenant :
un espace de stockage (12) configuré pour stocker une relation de correspondance entre un ou plusieurs groupes de discussion et un ou plusieurs éléments d'information de localisation de groupe concernant une zone définissant le ou les groupes de discussion ;
une unité d'obtention (113) configurée pour obtenir les informations de localisation de terminal concernant une localisation de chacun de la pluralité de terminaux (20) ;
une unité de détermination (114) configurée pour déterminer, sur la base des informations de localisation des terminaux et de la relation de correspondance, un groupe de discussion auquel chacun de la pluralité de terminaux (20) doit appartenir ;
une unité de réglage (115) configurée pour basculer un groupe de discussion auquel appartient actuellement chacun de la pluralité de terminaux (20) vers le groupe de discussion déterminé ;
une unité de mesure (117) configurée pour mesurer, pour chacun de la pluralité de terminaux (20), une vitesse de déplacement et un nombre de changements de groupe de conversation ; et
une unité de commande de communication (116) configurée pour transmettre, si au moins un de la vitesse de déplacement et du nombre de changements de groupe de conversation sont supérieurs ou égaux à une valeur seuil, un signal de requête à chacun de la pluralité de terminaux (20) afin de réduire un intervalle de transmission des informations de localisation des terminaux à un intervalle de transmission actuellement défini.

2. Appareil de traitement d'information (11) selon la revendication 1, comprenant en outre une unité de notification (116) configurée, si le changement de groupe de conversation a été effectué par l'unité de réglage (115), pour notifier à chacun de la pluralité de terminaux (20) que le changement de groupe de conversation a été effectué.

3. Appareil de traitement d'information (11) selon la revendication 1 ou 2, comprenant en outre :
une unité de traitement de texte (118) configurée pour générer des données textuelles à partir de données vocales transmises par chacun de la pluralité de terminaux (20) ; et
une unité de contrôle de communication (116) configurée pour gérer les données textuelles générées en fonction du groupe de conversation afin de transmettre les données textuelles générées à au moins un de la pluralité de terminaux (20) appartenant au groupe de discussion.

4. Appareil de traitement d'information (11) selon une quelconque des revendications 1 à 3, dans lequel, si le changement de groupe de conversation a été effectué par l'unité de réglage (115), un groupe de conversation précédent et un nouveau groupe de discussion sont clairement affichés sur chacun de la pluralité de terminaux (20).

5. Procédé de traitement d'information pour les communications un-à-plusieurs d'un terminal parmi une pluralité de terminaux appartenant à un groupe de discussion vers un ou plusieurs autres terminaux de la pluralité de terminaux appartenant au groupe de discussion, la pluralité de terminaux étant associés au groupe de discussion, comprenant :
le stockage, dans une mémoire, d'une relation de correspondance entre un ou plusieurs groupes de discussion et une ou plusieurs informations de localisation de groupe concernant une zone définissant le ou les groupes de discussion ;
l'obtention des informations de localisation de terminal concernant une localisation de chacun de la pluralité de terminaux ;
la détermination, sur la base des informations de localisation des terminaux et de la relation de correspondance, d'un groupe de discussion auquel chacun de la pluralité de terminaux doit appartenir ;
le réglage d'un groupe de discussion auquel appartient actuellement chacun de la pluralité de terminaux vers le groupe de discussion déterminé.
la mesure, pour chacun de la pluralité de terminaux, d'une vitesse de déplacement et d'un nombre de changements du groupe de conversation ; et
la transmission, si au moins un de la vitesse de déplacement et du nombre de changements de groupe de conversation sont supérieurs ou égaux à une valeur seuil, d'un signal de requête à chacun de la pluralité de terminaux afin de réduire un intervalle de transmission des informations de localisation des terminaux à un intervalle de transmission actuellement défini.

6. Programme de traitement d'information pour les communications un-à-plusieurs d'un terminal parmi à une pluralité de terminaux appartenant à un groupe de discussion vers un ou plusieurs autres terminaux de la pluralité de terminaux appartenant au groupe de discussion, la pluralité de terminaux étant associés au groupe de discussion, le programme amenant un ordinateur à fonctionner comme :
un moyen de stockage pour stocker, dans un espace de stockage, une relation de correspondance entre un ou plusieurs groupes de discussion et un ou plusieurs éléments d'information de localisation de groupe concernant une zone définissant le ou les groupes de discussion ;
un moyen d'obtention pour obtenir les informations de localisation de terminal concernant une localisation de chacun de la pluralité de terminaux ;
un moyen de détermination pour déterminer, sur la base des informations de localisation des terminaux et de la relation de correspondance, un groupe de discussion auquel chacun de la pluralité de terminaux doit appartenir ;
un moyen de réglage pour basculer un groupe de discussion auquel appartient actuellement chacun de la pluralité de terminaux vers le groupe de discussion déterminé. ;
un moyen de mesure pour mesurer, pour chacun de la pluralité de terminaux, une vitesse de déplacement et un nombre de changements de groupe de conversation ; et
un moyen de commande de communication pour transmettre, si au moins un de la vitesse de déplacement et du nombre de changements de groupe de conversation sont supérieurs ou égaux à une valeur seuil, un signal de requête à chacun de la pluralité de terminaux afin de réduire un intervalle de transmission des informations de localisation des terminaux à un intervalle de transmission actuellement défini.
